# EUROPEAN PATENT APPLICATION

(11) **EP 4 451 390 A1**
(43) Date of publication of application: **23.10.2024**
(21) Application number: 22950660.5
(22) Date of filing: 14.07.2022
(51) Int. Cl.: H01M 4/587, H01M 10/0525, H01M 4/136

(54) **NEGATIVE ELECTRODE SHEET, SECONDARY BATTERY, BATTERY MODULE, BATTERY PACK, AND ELECTRIC APPARATUS**

(71) Applicant: Contemporary Amperex Technology (Hong Kong) Limited, Central, Central And Western District (HK)
(72) Inventor: WU, Qifan, Ningde, Fujian 352100 (CN); DONG, Xiaobin, Ningde, Fujian 352100 (CN); ZHANG, Ming, Ningde, Fujian 352100 (CN)
(74) Representative: Kraus & Lederer PartGmbB
(86) International application number: PCT/CN2022/105821
(87) International publication number: WO 2024/011539

(57) **Abstract**

The present application provides a negative electrode plate, a secondary battery, a battery module, a battery pack, and an electrical device. The negative electrode plate includes: a negative electrode current collector; and a negative electrode film layer which is located on at least one surface of the negative electrode current collector and includes first negative electrode active material particles and second negative electrode active material particles, the first negative electrode active material particles including a plurality of adsorption holes and having a tap density of 0.4 g/cm³-1.4 g/cm³, wherein a difference d in median particle size between the first negative electrode active material particles and the second negative electrode active material particles satisfies: 3 µm ≤ d ≤ 19 µm, and a compaction density PD of the negative electrode film layer satisfies: 0.8 g/cm³ ≤ PD ≤ 1.4 g/cm³.

## Description

### TECHNICAL FIELD

The present application relates to the field of battery technology, in particular to a negative electrode plate, a secondary battery, a battery module, a battery pack, and an electrical device.

### BACKGROUND

As energy and environment issues are increasingly prominent, the new energy industry has received more and more attention. Lithium-ion batteries have been widely used as an important novel energy storage device in recent years due to their characteristics such as high energy density and good cycle performance. However, due to the scarcity of active material resources related to the lithium-ion batteries, the batteries are always high-cost and face severe problems such as resource depletion. Therefore, it is necessary to develop other low-cost metal ion secondary battery systems.

Sodium-ion batteries have become a popular research direction in recent years due to their advantages such as low cost, abundant resources, and similar manufacturing processes to the lithium-ion batteries.

However, due to the limitation by voltage plateaus and low gram capacities of existing positive and negative electrode materials for the sodium-ion batteries, there is always a significant gap in energy density between the sodium-ion batteries and the lithium-ion batteries, making it impossible to truly achieve commercial applications of sodium-ion batteries. Moreover, the initial coulombic efficiency and rate performance of the sodium-ion batteries are also required to be improved.

### SUMMARY

The present application is made in view of the foregoing topic and aims to provide a negative electrode plate, a secondary battery, a battery module, a battery pack, and an electrical device to effectively improve energy density and rate performance of sodium-ion batteries.

A first aspect of the present application provides a negative electrode plate, including: a negative electrode current collector; and a negative electrode film layer which is located on at least one surface of the negative electrode current collector and includes first negative electrode active material particles and second negative electrode active material particles, the first negative electrode active material particles including a plurality of adsorption holes and having a tap density of 0.4 g/cm³-1.4 g/cm³, and optionally 0.6 g/cm³-1.0 g/cm³, wherein a difference d in median particle size between the first negative electrode active material particles and the second negative electrode active material particles satisfies: 3 µm ≤ d ≤ 19 µm, and a compaction density PD of the negative electrode film layer satisfies: 0.8 g/cm³ ≤ PD ≤ 1.4 g/cm³, and optionally 1.0 g/cm³ ≤ PD ≤ 1.2 g/cm³.

By compounding the first negative electrode active material particles and the second negative electrode active material particles that satisfy the above conditions in the present application, the negative electrode film layer can have a high compaction density and a high porosity inside the negative electrode film layer. Specifically, the first negative electrode active material particles include a plurality of adsorption pores, and have a tap density within the above proper ranges, so the interior of the first negative electrode active material particles can still have an enough quantity of adsorption pores after cold pressing. As a result, Na⁺ can be smoothly adsorbed by the first negative electrode active material particles in a charge process and desorbed in a discharge process. Further, the difference between the median particle size of the first negative electrode active material particles and the median particle size of the second negative electrode active material particles is within the above proper range, which is beneficial to filling gaps between the first negative electrode active material particles with the second negative electrode active material particles, so that the negative electrode active material particles have a high bulk density, and the negative electrode film layer after cold pressing has a proper compaction density. As a result, the negative active material particles in the negative electrode film layer are in close contact, which can improve transport performance of electrons and sodium ions in the negative electrode plate and then improve rate performance of a sodium-ion battery.

In any of embodiments, the first negative electrode active material particles may have a median particle size D¹50 of 4 µm-50 µm, and optionally 4 µm-25 µm; and the second negative electrode active material particles may have a median particle size D²50 of 1 µm-40 µm, and optionally 1 µm-20 µm.

On the one hand, D¹50 and D²50 within the above proper ranges are conducive to controlling the difference between D¹50 and D²50 within the range defined in the present application, thereby facilitating the filling of the second negative electrode active material particles into the gaps between the first negative electrode active material particles, and then increasing the compaction density of the negative electrode film layer. On the other hand, D¹50 and D²50 within the above proper ranges can enable the first negative electrode active material particles and the second negative electrode active material particles to have good transport performance of electrons and sodium ions inside particles and lower particle interface resistance. As a result, using the negative electrode plate of the present application in a sodium-ion battery can allow the sodium-ion battery to have a high energy density and low impedance, so that the sodium-ion battery has high capacity, good rate performance, and good cycle performance.

In any of embodiments, based on a total mass of the first negative electrode active material particles and the second negative electrode active material particles, a mass percentage of the first negative electrode active material particles may be 5%-95%, and optionally 70%-95%.

The mass percentage of the first negative electrode active material particles and the second negative electrode active material particles within the above proper ranges can ensure that the second negative electrode active material particles fill the gaps of the first negative electrode active material particles, and enable the negative electrode active material particles to have a proper specific surface area. As a result, the compaction density of the negative electrode film layer can be increased, the contact area between the particles can also be increased, transport paths between the particles can be improved, and the occurrence of inter-particle bridge cutoff can be avoided, so that the sodium-ion battery has a high energy density and cycle performance.

In any of embodiments, a percentage of elongation E of the negative electrode plate may satisfy: 0.1% ≤ E ≤ 0.2%, and optionally 0.1% ≤ E ≤ 0.15%.

The difference in median particle size between the first negative electrode active material particles and the second negative electrode active material particles in the present application within the proper range enables the negative electrode active material particles to have a high bulk density. As a result, compared to negative electrode active material particles with a lower bulk density, the negative electrode plate of the present application can have lower elongation under the same cold pressing parameters.

In any of embodiments, a coating weight CW of the negative electrode film layer on single side may be 2 mg/cm²-13 mg/cm², and optionally 5 mg/cm²-12 mg/cm².

The coating weight of the negative electrode film layer on single side within the above proper range is conducive to controlling a thickness of the negative electrode film layer within a proper range. As a result, the negative electrode plate can have proper migration paths for electrons and sodium ions and proper capacity. Therefore, using the negative electrode plate of the present application in a sodium-ion battery can allow the sodium-ion battery to have good rate performance and high energy density.

In any of embodiments, the negative electrode film layer may satisfy: 30% ≤ P ≤ 60%, and optionally 45% ≤ P ≤ 55%, where P=[1-CW/(d₁*PA)]*100%, d₁=d₂/(1+E), CW represents the coating weight of the negative electrode film layer on single side, PA represents a true density of the negative electrode film layer on single side, E represents the percentage of elongation of the negative electrode plate; and d₂ represents a thickness of the negative electrode film layer on single side.

When the parameter P of the negative electrode film layer satisfies the above conditions, it may be considered that an increase in the compaction density of the negative electrode film layer is mainly implemented by an increase in the bulk density of the negative electrode active material particles, which has no significant impact on the porosity of the negative electrode film layer. As a result, the compaction density of the negative electrode film layer is increased, and infiltration of the negative electrode film layer by an electrolytic solution can be maintained, thereby ensuring that the secondary battery has high energy density and good rate performance.

In any of embodiments, a pore size of the adsorption pores in the first negative electrode active material particles may be 0.1 nm-16 nm, and optionally 1 nm-7 nm. The pore size of the adsorption pores within the above proper ranges is conducive to adsorption and desorption of Na⁺, thereby improving the rate performance of the secondary battery.

Optionally, a specific surface area of the first negative electrode active material particles is 1 m³/g-40 m³/g, and optionally 1.5 m³/g-10 m³/g. The specific surface area of the first negative electrode active material particles within the proper ranges can not only enable the negative electrode plate to have good sodium ion transport performance, but also reduce loss of active ions caused by a solid electrolyte interface (SEI) film. As a result, initial coulombic efficiency of the sodium-ion battery can be guaranteed.

Optionally, a (002) interplanar spacing of the first negative electrode active material particles is 0.34 nm-0.45 nm, and optionally 0.35 nm-0.4 nm. The interplanar spacing of the first negative electrode active material particles within the proper ranges can allow smooth intercalation and de-intercalation of Na⁺, thereby improving the rate performance of the sodium-ion battery.

Optionally, a true density of the first negative electrode active material particles is 1.3 g/cm³-2.0 g/cm³, and optionally 1.4 g/cm³-1.8 g/cm³. With the true density of the first negative electrode active material particles within the above ranges and the tap density within the ranges defined in the present application, it may be considered that the first negative electrode active material particles include an enough quantity of adsorption pores. As a result, Na⁺ can be smoothly adsorbed and desorbed, so that the sodium-ion battery has good rate performance.

In any of embodiments, the first negative electrode active material particles may be selected from one or more of hard carbon, soft carbon, and mesophase carbon microbeads; and the second negative electrode active material particles may be selected from one or more of hard carbon, soft carbon, and mesophase carbon microbeads. The particles selected from the above types of materials have mature production processes, facilitating processing of the first negative electrode active material particles and the second negative electrode active material particles that satisfy the conditions in the present application.

In any of embodiments, the first negative electrode active material particles may have an irregular shape and/or microspheric shape, and the second negative electrode active material particles have an irregular shape and/or microspheric shape.

Optionally, based on the total mass of the first negative electrode active material particles and the second negative electrode active material particles, a mass percentage of the first negative electrode active material particles in irregular shapes is 5%-95%, and optionally 70%-95%.

When the difference in median particle size between the first negative electrode active material particles and the second negative electrode active material particles is within the range of the present application, the negative electrode film layer can have a high compaction density regardless of the morphologies of the first negative electrode active material particles and the second negative electrode active material particles. As a result, this can improve the process flexibility of the negative electrode plate and allow the sodium-ion battery to have a high energy density.

In any of embodiments, the first negative electrode active material particles are selected from hard carbon particles having an irregular shape, the second negative electrode active material particles are selected from microspheric hard carbon particles, and based on the total mass of the first negative electrode active material particles and the second negative electrode active material particles, a mass percentage of the first negative electrode active material particles is 70%-95%.

When the second negative electrode active material particles are microspheric hard carbon particles, they can not only fill the gaps between the first negative electrode active material particles to increase the compaction density of the negative electrode film layer, adhesion of a binder to the negative electrode active material particles and conductivity of the negative electrode film layer, but also can slip to a certain extent to further increase the compaction density of the negative electrode film layer. The proportion of the first negative electrode active material particles and the second negative electrode active material particles within the proper range can further enable the negative electrode active material particles to have a suitable specific surface area, so that surfaces of the negative electrode active material particles have a proper quantity of electrochemical reaction active sites to ensure the coulombic efficiency of the sodium-ion battery.

In any of embodiments, the first negative electrode active material particles are selected from microspheric hard carbon particles, and a median particle size D¹50 of the first negative electrode active material particles is 10 µm-50 µm; and the second negative electrode active material particles are selected from microspheric hard carbon particles, and the median particle size D²50 of the second negative electrode active material particles is 5 µm-40 µm, wherein based on a total mass of the first negative electrode active material particles and the second negative electrode active material particles, a mass percentage of the first negative electrode active material particles is 5%-95%, and optionally 70%-95%.

The microspheric hard carbon particles have a relatively high bulk density. On this basis, the median particle sizes of the first negative electrode active material particles and the second negative electrode active material particles satisfying the above ranges can further increase the bulk density of the negative electrode active material particles. Further, the microspheric second negative electrode active material particles can also exert both pore filling and slip effects, thereby significantly increasing the compaction density of the negative electrode film layer. Therefore, using the negative electrode plate of the present application in a sodium-ion battery can significantly improve the energy density, rate performance, and cycle stability of the sodium-ion battery.

In any of embodiments, the compaction density PD of the negative electrode film layer may satisfy: 1.0 g/cm³ ≤ PD ≤ 1.2 g/cm³; and the negative electrode film layer may satisfy: 30% ≤ P ≤ 60%, and optionally 45% ≤ P ≤ 55%, where P=[1-CW/(d₁*PA)]*100%, d₁=d₂/(1+E), CW represents the coating weight of the negative electrode film layer on single side, PA represents a true density of the negative electrode film layer on single side, E represents the percentage of elongation of the negative electrode plate; and d₂ represents a thickness of the negative electrode film layer on single side.

When the parameter P of the negative electrode film layer satisfies the above condition, it may be considered that an increase in the compaction density of the negative electrode film layer is mainly implemented by an increase in the bulk density of the negative electrode active material particles. Therefore, the negative electrode film layer can have a high compaction density, even without deformation or slip of the hard carbon particles. As a result, the hard carbon materials can be applied to a sodium-ion battery, so that the sodium-ion battery has a broad application prospect.

In any of embodiments, the negative electrode film layer further includes a slip increment component, a ratio of a sum of a mass of the first negative electrode active material particles and a mass of the second negative electrode active material particles to a mass of the slip increment component is 100:2-100:1, and the slip increment component includes one or more of artificial graphite, natural graphite, and graphene.

The negative electrode film layer includes a small amount of slip increment component, which can slip during cold pressing, so as to further increase the compaction density of the negative electrode film layer. Moreover, the foregoing slip increment component further has good conductivity, and can further improve the electron transport performance of the negative electrode plate when applied to the negative electrode plate.

In any of embodiments, the negative electrode film layer further includes a flexible binder, the flexible binder includes one or more of a styrene-acrylic emulsion, a copolymer of vinylidene fluoride and tetrafluoroethylene, a copolymer of vinylidene fluoride and hexafluoropropylene, a copolymer of vinylidene fluoride and acrylate, polytetrafluoroethylene, nitrile rubber, and hydrogenated nitrile rubber.

The negative electrode film layer including the above flexible binder can have good flexibility. As a result, the negative electrode film layer can have smaller stress in the cold pressing process, and the negative electrode plate can have lower elongation. As a result, the compaction density of the negative electrode film layer can be further increased, thereby increasing the energy density of the sodium-ion battery.

A second aspect of the present application provides a secondary battery, including the negative electrode plate in the first aspect of the present application.

The secondary battery of the present application includes the negative electrode plate in the first aspect of the present application, and as a result, it can have a high energy density and good rate performance.

A third aspect of the present application provides a battery module, including the secondary battery in the second aspect of the present application.

A fourth aspect of the present application provides a battery pack, including the battery module in the third aspect of the present application.

A fifth aspect of the present application provides an electrical device, including at least one of the secondary battery in the second aspect of the present application, the battery module in the third aspect of the present application, or the battery pack in the fourth aspect of the present application.

The battery module, the battery pack, and the electrical device of the present application include the secondary battery, and therefore, have at least the same advantages as the secondary battery.

### DESCRIPTION OF THE DRAWINGS

Fig. 1 is a schematic diagram of a test of the percentage of elongation of a negative electrode plate according to an embodiment of the present application.
Fig. 2 is a schematic diagram of a secondary battery according to an embodiment of the present application.
Fig. 3 is an exploded view of the secondary battery shown in Fig. 2 according to an embodiment of the present application.
Fig. 4 is a schematic diagram of a battery module according to an embodiment of the present application.
Fig. 5 is a schematic diagram of a battery pack according to an embodiment of the present application.
Fig. 6 is an exploded view of the battery pack shown in Fig. 5 according to an embodiment of the present application.
Fig. 7 is a schematic diagram of an electrical device using a secondary battery as a power source according to an embodiment of the present application.
Fig. 8 is a scanning electron microscope (SEM) image of a negative electrode plate in Example 1 of the present application.

Reference numerals:

1 battery pack; 2 upper box; 3 lower box; 4 battery module; 5 secondary battery; 51 shell; 52 electrode assembly; 53 cover plate.

### DETAILED DESCRIPTION

Hereinafter, embodiments of a negative electrode plate, a secondary battery, a battery module, a battery pack, and an electrical device of the present application will be described in detail properly with reference to the accompanying drawings. However, unnecessary detailed description may be omitted. For example, detailed description of well-known matters and repeated description of actually identical structures are omitted. This prevents the following description from becoming unnecessarily lengthy and facilitates understanding of those skilled in the art. In addition, the accompanying drawings and the following description are provided for those skilled in the art to fully understand the present application and are not intended to limit the subject matter of the claims.

The "range" disclosed in the present application is defined in the form of a lower limit and an upper limit. A given range is defined by selecting a lower limit and an upper limit, and the selected lower limit and upper limit define the boundaries of a particular range. The range defined in this way can include or exclude end values, and can be combined arbitrarily, that is, any lower limit can be combined with any upper limit to form a range. For example, if a range of 60-120 and 80-110 is listed for a specific parameter, it is understood that a range of 60-110 and 80-120 is also expected. In addition, if 1 and 2 as minimum range values are listed, and if 3, 4 and 5 as maximum range values are listed, the following ranges can all be expected: 1-3, 1-4, 1-5, 2-3, 2-4 and 2-5. In the present application, unless otherwise specified, the numerical range "a-b" represents an abbreviation of any combination of real numbers between a and b, where both a and b are real numbers. For example, the numerical range "0-5" represents all real numbers "0-5" listed herein, and "0-5" is only an abbreviation of a combination of these values. In addition, when a parameter is expressed as an integer ≥ 2, it is equivalent to disclosing that the parameter is, for example, an integer 2, 3, 4, 5, 6, 7, 8, 9, 10, 11, 12, etc.

Unless otherwise specified, all the embodiments and optional embodiments of the present application can be combined with each other to form new technical solutions.

Unless otherwise specified, all the technical features and optional technical features of the present application can be combined with each other to form new technical solutions.

Unless otherwise specified, all the steps of the present application can be carried out sequentially or randomly, but preferably carried out sequentially. For example, the method includes steps (a) and (b), which represents that the method may include steps (a) and (b) performed sequentially, or may include steps (b) and (a) performed sequentially. For example, the method may further include step (c), which represents that step (c) may be added to the method in any order, for example, the method may include steps (a), (b) and (c), or steps (a), (c) and (b), or steps (c), (a) and (b).

Unless otherwise specified, the expressions "comprise" and "include" mentioned in the present application are open-ended or closed-ended. For example, the expression "comprise" and "include" may comprise or include other components that are not listed, or comprise or include only the listed components.

Unless otherwise specified, in the present application, the term "or" is inclusive. For example, the phrase "A or B" represents "A, B, or both A and B". More specifically, any of the following conditions satisfies the condition "A or B": A is true (or exists) and B is false (or does not exist); A is false (or does not exist) and B is true (or exists); or both A and B are true (or exist).

In order to improve energy density and rate performance of sodium-ion batteries, it is important to select negative electrode active materials for the sodium-ion batteries.

After in-depth research, the inventors have found that, unlike lithium intercalation reactions of lithium-ion batteries, in a charge process a negative electrode of a sodium-ion battery not only undergoes Na⁺ intercalation, but also adsorption of Na⁺ to the negative electrode active material. When negative electrode active material particles with a plurality of adsorption pores are used, Na⁺ can smoothly enter and exit the negative electrode during long-term cycle, thereby ensuring capacity exertion of the negative electrode. However, after the negative electrode active material particles with a lot of adsorption pores are prepared into a negative electrode film layer, the compaction density of the negative electrode film layer decreases, which not only affects the energy density of the sodium-ion battery, but also extends transport paths of electrons and sodium ions in a negative electrode plate, thereby reducing transport performance of electrons and sodium ions in the negative electrode plate and then deteriorating rate performance of the sodium-ion battery.

On this basis, the inventors provide a negative electrode plate, a secondary battery, a battery module, a battery pack, and an electrical device after deep thinking and many experiments.

### Negative electrode plate

A first aspect of the present application provides a negative electrode plate, which includes a negative electrode current collector and a negative electrode film layer. The negative electrode film layer is located on at least one surface of the negative electrode current collector, the negative electrode film layer includes first negative electrode active material particles and second negative electrode active material particles, the first negative electrode active material particles include a plurality of adsorption holes and have a tap density 0.4 g/cm³-1.4 g/cm³, and optionally 0.6 g/cm³-1.0 g/cm³. A difference d in median particle size between the first negative electrode active material particles and the second negative electrode active material particles satisfies: 3 µm ≤ d ≤ 19 µm, 3 µm ≤ d ≤ 15 µm, 3 µm ≤ d ≤ 10 µm, 3 µm ≤ d ≤ 5 µm, 5 µm ≤ d ≤ 19 µm, 5 µm ≤ d ≤ 15 µm, 5 µm ≤ d ≤ 10 µm, 10 µm ≤ d ≤ 19 µm, 10 µm ≤ d ≤ 15 µm, or 15 µm ≤ d ≤ 19 µm. A compaction density PD of the negative electrode film layer satisfies: 0.8 g/cm³ ≤ PD ≤ 1.4 g/cm³, 0.8 g/cm³ ≤ PD ≤ 1.2 g/cm³, 0.8 g/cm³ ≤ PD ≤ 1.0 g/cm³, 1.0 g/cm³ ≤ PD ≤ 1.4 g/cm³, or 1.0 g/cm³ ≤ PD ≤ 1.2 g/cm³.

Although the mechanism is not yet clear, the inventors of the present application have unexpectedly found: the negative electrode film layer of the present application includes the first negative electrode active material particles and the second negative electrode active material particles that satisfy the above conditions, and the combination of the two types of negative electrode active material particles can enable the negative electrode film layer to have a high compaction density and a high porosity inside the negative electrode film layer. As a result, using the negative electrode plate of the present application in a sodium-ion battery can enable the sodium-ion battery to have a high energy density and good rate performance.

Specifically, without being bound by any theory or explanation, the first negative electrode active material particles include a plurality of adsorption pores, and have a tap density within the above proper range, so the interior of the first negative electrode active material particles can still have an enough quantity of adsorption pores after cold pressing. As a result, Na⁺ can be smoothly adsorbed by the first negative electrode active material particles in a charge process and desorbed in a discharge process. Further, the difference between the median particle size of the first negative electrode active material particles and the median particle size of the second negative electrode active material particles is within the above proper range, which is beneficial to filling gaps between the first negative electrode active material particles with the second negative electrode active material particles, so that the negative electrode active material particles have a high bulk density, and the negative electrode film layer after cold pressing has a proper compaction density. As a result, the negative active material particles in the negative electrode film layer are in close contact, which can improve transport performance of electrons and sodium ions in the negative electrode plate and then improve the rate performance of the sodium-ion battery.

In some embodiments, the median particle size D¹50 of the first negative electrode active material particles may be 4 µm-50 µm, and optionally 4 µm-25 µm; and the median particle size D²50 of the second negative electrode active material particles may be 1 µm-40 µm, and optionally 1 µm-20 µm. For example, D¹50 may be 4 µm, 8 µm, 10 µm, 15 µm, 20 µm, 25 µm, 35 µm, 45 µm, 50 µm, or within a range of any of the above values; and D²50 may be 1 µm, 5 µm, 10 µm, 15 µm, 20 µm, 25 µm, 30 µm, 35 µm, 40 µm, or within a range of any of the above values.

Without intention to be bound by any theory or explanation, D¹50 and D²50 within the above proper ranges are conducive to increasing the compaction density of the negative electrode film layer, increasing contact between the particles and reducing impedance of the sodium-ion battery. On the one hand, D¹50 and D²50 within the above proper ranges are conducive to controlling the difference between D¹50 and D²50 within the range defined in the present application, thereby facilitating the filling of the second negative electrode active material particles into the gaps between the first negative electrode active material particles, and then increasing the compaction density of the negative electrode film layer. On the other hand, the first negative electrode active material particles and the second negative electrode active material particles have proper particle sizes, which can not only enable good transport performance of electrons and sodium ions inside the first negative electrode active material particles and the second negative electrode active material particles, but also enable the first negative electrode active material particles and the second negative electrode active material particles to have lower particle interface resistance. As a result, using the negative electrode plate of the present application in a sodium-ion battery can allow the sodium-ion battery to have a high energy density and low impedance, so that the sodium-ion battery has high capacity, good rate performance, and good cycle performance.

In some embodiments, based on a total mass of the first negative electrode active material particles and the second negative electrode active material particles, a mass percentage of the first negative electrode active material particles may be 5%-95%, and optionally 70%-95%. For example, based on the total mass of the first negative electrode active material particles and the second negative electrode active material particles, the mass percentage of the first negative electrode active material particles may be 5%, 10%, 20%, 30%, 40%, 50%, 60%, 70%, 75%, 80%, 85%, 90%, 95%, or within a range of any of the above values.

Without being bound by any theory or explanation, the mass percentage of the first negative electrode active material particles and the second negative electrode active material particles within the above proper range can ensure that the second negative electrode active material particles fill the gaps of the first negative electrode active material particles, and enables the negative electrode active material particles to have a proper specific surface area. As a result, the compaction density of the negative electrode film layer can be increased, the contact area between the particles can also be increased, transport paths between the particles can be improved, and the occurrence of inter-particle bridge cutoff can be avoided, so that the sodium-ion battery has a high energy density and cycle performance.

In some embodiments, a percentage of elongation E of the negative electrode plate may satisfy: 0.1% ≤ E ≤ 0.2%, and optionally 0.1% ≤ E ≤ 0.15%. For example, E may be 0.1%, 0.12%, 0.15%, 0.18%, 0.2%, or within a range of any of the above values.

Without being bound by any theory or explanation, the difference in median particle size between the first negative electrode active material particles and the second negative electrode active material particles in the present application within the proper range enables the negative electrode active material particles to have a high bulk density. Therefore, compared to negative electrode active material particles with a lower bulk density, the negative electrode plate of the present application can have lower elongation under the same cold pressing parameters.

In some embodiments, a coating weight CW of the negative electrode film layer on single side may be 2 mg/cm²-13 mg/cm², and optionally 5 mg/cm²-12 mg/cm². For example, CW may be 2 mg/cm², 5 mg/cm², 8 mg/cm², 10 mg/cm², 12 mg/cm², 13 mg/cm², or within a range of any of the above values.

The coating weight of the negative electrode film layer on single side may represent solid component content of negative electrode slurry coated on the negative electrode film layer on single side per unit area, and may be numerically equal to an areal density of the negative electrode film layer on single side.

Without being bound by any theory or explanation, the coating weight of the negative electrode film layer on single side within the above proper ranges is conducive to controlling a thickness of the negative electrode film layer within a proper range. As a result, the negative electrode plate can have proper migration paths for electrons and sodium ions and proper capacity. Therefore, using the negative electrode plate of the present application in a sodium-ion battery can allow the sodium-ion battery to have good rate performance and high energy density.

In some embodiments, the negative electrode film layer may satisfy: 30% ≤ P ≤ 60%. Optionally, 45% ≤ P ≤ 55%.

P=[1-CW/(d₁*PA)]*100%, d₁=d₂/(1+E); CW represents the coating weight of the negative electrode film layer on single side; PA represents a true density of the negative electrode film layer on single side, and may be calculated as follows: PA=1/(∑xᵢ/ρᵢ), where xᵢ represents a mass ratio of the i^{th} component that constitutes the negative electrode film layer in the negative electrode film layer, and ρᵢ represents a density of the i^{th} component; E represents the percentage of elongation of the negative electrode plate; and d₂ represents a thickness of the negative electrode film layer on single side.

Without being bound by any theory or explanation, the inventors have unexpectedly found, when the parameter P of the negative electrode film layer satisfies the above condition, it may be considered that the increase in the compaction density of the negative electrode film layer is mainly implemented by an increase in the bulk density of the negative electrode active material particles, which has no significant impact on the porosity of the negative electrode film layer. As a result, not only the compaction density of the negative electrode film layer is increased, but also the infiltration of the negative electrode film layer by an electrolytic solution can be maintained, thereby ensuring that the secondary battery has high energy density and good rate performance.

In some embodiments, a pore size of the adsorption pores in the first negative electrode active material particles may be 0.1 nm-16 nm, and optionally 1 nm-7 nm. The pore size of the adsorption pores within the above proper ranges is conducive to adsorption and desorption of Na⁺, thereby facilitating improving the rate performance of the secondary battery.

Optionally, a specific surface area of the first negative electrode active material particles may be 1 m³/g-40 m³/g, and optionally 1.5 m³/g-10 m³/g. The specific surface area of the first negative electrode active material particles within the proper range can not only enable the negative electrode plate to have good sodium ion transport performance, but also reduce loss of active ions caused by a solid electrolyte interface (SEI) film. As a result, initial coulombic efficiency of the sodium-ion battery can be guaranteed.

Optionally, a (002) interplanar spacing of the first negative electrode active material particles may be 0.34 nm-0.45 nm, and optionally 0.35 nm-0.4 nm. The interplanar spacing of the first negative electrode active material particles within the proper ranges can allow smooth intercalation and de-intercalation of Na⁺, thereby improving the rate performance of the sodium-ion battery.

Optionally, a true density of the first negative electrode active material particles may be 1.3 g/cm³-2.0 g/cm³, and optionally 1.4 g/cm³-1.8 g/cm³. With the true density of the first negative electrode active material particles within the above ranges and the tap density within the ranges defined in the present application, it may be considered that the first negative electrode active material particles include an enough quantity of adsorption pores. As a result, Na⁺ can be smoothly adsorbed and desorbed, so that the sodium-ion battery has good rate performance.

The present application does not limit materials of the first negative electrode active material particles and the second negative electrode active material particles. In some embodiments, the first negative electrode active material particles may be selected from one or more of hard carbon, soft carbon, and mesocarbon microbeads (MCMB); and the second negative electrode active material particles may be selected from one or more of hard carbon, soft carbon, and MCMB.

The particles selected from the above types of materials have mature production processes, facilitating processing of the first negative electrode active material particles and the second negative electrode active material particles that satisfy the conditions in the present application.

Morphologies of the first negative electrode active material particles and the second negative electrode active material particles are not limited in the present application. In some embodiments, the first negative electrode active material particles may have an irregular shape and/or microspheric shape, and the second negative electrode active material particles may have an irregular shape and/or microspheric shape.

Optionally, based on the total mass of the first negative electrode active material particles and the second negative electrode active material particles, a mass percentage of the first negative electrode active material particles in irregular shapes may be 5%-95%, and optionally 70%-95%.

The morphology of the first negative electrode active material particles may be the same or different from that of the second negative electrode active material particles.

In the negative electrode plate of the present application, when the difference in median particle size between the first negative electrode active material particles and the second negative electrode active material particles is within the range of the present application, the negative electrode film layer can have a high compaction density regardless of the morphologies of the first negative electrode active material particles and the second negative electrode active material particles. This can improve the process flexibility of the negative electrode plate and allow the sodium-ion battery to have a high energy density.

In some embodiments, both the first negative electrode active material particles and the second negative electrode active material particles may be hard carbon particles.

The inventors have found through research that hard carbon materials have lower energy storage voltage, higher capacity, and good cycling stability. In addition, the hard carbon materials have abundant sources and simple preparation processes. More importantly, the hard carbon particles *per se* have large lattice spacing and many pores, and therefore, are an ideal choice for the first negative electrode active material particles in the present application. Conventional hard carbon materials have high hardness and almost do not deform or slip during cold pressing, and when they are applied to negative electrode film layers, compaction densities of the negative electrode film layers are usually low, but in the negative electrode film layer of the present application, the second negative electrode active material particles with smaller particle sizes can fill the gaps of the first negative electrode active material particles, so the negative electrode film layer can still have a high compaction density without deformation of the first negative electrode active material particles. Therefore, when both the first negative electrode active material particles and the second negative electrode active material particles are hard carbon particles, using the negative electrode plate of the present application in a sodium-ion battery can reduce the cost of the sodium-ion battery and improve the energy density, rate performance, and cycle stability of the sodium-ion battery.

In some embodiments, the first negative electrode active material particles may be selected from hard carbon particles having an irregular shape, the second negative electrode active material particles may be selected from microspheric hard carbon particles, and based on the total mass of the first negative electrode active material particles and the second negative electrode active material particles, the mass percentage of the first negative electrode active material particles may be 70%-95%.

Without being bound by any theory or explanation, when the second negative electrode active material particles are microspheric hard carbon particles, they can not only fill the gaps between the first negative electrode active material particles to increase the compaction density of the negative electrode film layer, adhesion of a binder to the negative electrode active material particles and conductivity of the negative electrode film layer, but also can slip to a certain extent to further increase the compaction density of the negative electrode film layer. The proportions of the first negative electrode active material particles and the second negative electrode active material particles within the proper ranges can further enable the negative electrode active material particles to have a suitable specific surface area, so that surfaces of the negative electrode active material particles have a proper quantity of electrochemical reaction active sites to ensure the coulombic efficiency of the sodium-ion battery.

In some embodiments, the first negative electrode active material particles may be selected from microspheric hard carbon particles, and the median particle size D¹50 of the first negative electrode active material particles is 10 µm-50 µm; and the second negative electrode active material particles may be selected from microspheric hard carbon particles, and the median particle size D²50 of the second negative electrode active material particles is 5 µm-40 µm, wherein based on the total mass of the first negative electrode active material particles and the second negative electrode active material particles, the mass percentage of the first negative electrode active material particles may be 5%-95%, and optionally 70%-95%.

Without being bound by any theory or explanation, the microspheric hard carbon particles *per se* have a relatively high bulk density. On this basis, the median particle sizes of the first negative electrode active material particles and the second negative electrode active material particles satisfying the above ranges can further increase the bulk density of the negative electrode active material particles. Further, the microspheric second negative electrode active material particles can also exert both pore filling effect and slipping effect, thereby significantly increasing the compaction density of the negative electrode film layer. Therefore, using the negative electrode plate of the present application in a sodium-ion battery can significantly improve the energy density, rate performance, and cycle stability of the sodium-ion battery.

In some embodiments, both the first negative electrode active material particles and the second negative electrode active material particles may be hard carbon particles. The compaction density PD of the negative electrode film layer may satisfy: 1.0 g/cm³ ≤ PD ≤ 1.2 g/cm³; the negative electrode film layer may satisfy: 30% ≤ P ≤ 60%, and optionally 45% ≤ P ≤ 55%, where P=[1-CW/(d₁*PA)]*100%, d₁=d₂/(1+E), and CW represents a coating weight of the negative electrode film layer on single side; PA represents a true density of the negative electrode film layer on single side, and may be calculated as follows: PA=1/(∑xᵢ/ρᵢ), where xᵢ represents a mass ratio of the i^{th} component that constitutes the negative electrode film layer in the negative electrode film layer, and ρᵢ represents a density of the i^{th} component; E represents a percentage of elongation of the negative electrode plate; and d₂ represents a thickness of the negative electrode film layer on single side.

Without being bound by any theory or explanation, when the parameter P of the negative electrode film layer satisfies the above condition, it may be considered that the increase in the compaction density of the negative electrode film layer is mainly implemented by an increase in the bulk density of the negative electrode active material particles. Therefore, the negative electrode film layer can still have a high compaction density without deformation or slip of the hard carbon particles. As a result, the hard carbon materials can be applied to a sodium-ion battery, so that the sodium-ion battery has a broad application prospect.

In some embodiments, the negative electrode film layer may further include a slip increment component, a ratio of a sum of a mass of the first negative electrode active material particles and a mass of the second negative electrode active material particles to a mass of the slip increment component may be 100:2-100:1, and the slip increment component includes one or more of artificial graphite, natural graphite, and graphene.

Without being bound by any theory or explanation, the negative electrode film layer includes a small amount of slip increment component, which can slip during cold pressing, so as to further increase the compaction density of the negative electrode film layer. Moreover, the foregoing slip increment component further has good conductivity, and can further improve the electron transport performance of the negative electrode plate when applied to the negative electrode plate.

In some embodiments, the negative electrode film layer may further include a flexible binder, which includes one or more of a styrene-acrylic emulsion, a copolymer of vinylidene fluoride and tetrafluoroethylene, a copolymer of vinylidene fluoride and hexafluoropropylene, a copolymer of vinylidene fluoride and acrylate, polytetrafluoroethylene, nitrile rubber, and hydrogenated nitrile rubber.

Without being bound by any theory or explanation, the negative electrode film layer comprising the above flexible binder can have good flexibility. As a result, the negative electrode film layer can have smaller stress in the cold pressing process, the negative electrode active material particles are easier to accumulate, and the negative electrode plate can have lower elongation. As a result, the compaction density of the negative electrode film layer can be further increased, thereby increasing the energy density of the sodium-ion battery.

It should be noted that the parameters of the negative electrode film layer provided in the present application refer to ranges of parameters of the negative electrode film layer on single side. When the negative electrode film layers are disposed on two surfaces of the negative electrode current collector and wherein the parameters of the negative electrode film layer on either side satisfy the present application, it is considered to fall within the protection scope of the present application.

The first negative electrode active material particles and the second negative electrode active material particles in the present application may be obtained in various ways without limitation. For example, the first negative electrode active material particles and the second negative electrode active material particles may be purchased or self-made.

As an example, the first negative electrode active material particles and the second negative electrode active material particles may be hard carbon particles having irregular shapes. The first negative electrode active material particles and the second negative electrode active material particles may be prepared by the following steps: placing coconut shells at 300°C for pre-carbonization; crushing the pre-carbonized coconut shells with a roller machine into particles having a diameter of about 2 mm, and removing impurities through screening; heating the particles at 400°C-800°C, and optionally, introducing halogen or hydrogen halide gas to remove ash, so as to obtain particles that are suitable for ball milling; ball milling the particles to obtain carbon particles of Dv50=50 µm/40 µm/25 µm/20 µm/9 µm/5 µm/3 µm/1 µm; and placing and keeping the ball milled particles in an inert atmosphere at a temperature of 1150°C for carbonization, and optionally, introducing acetylene gas may for coating the ball milled particles with vapor deposited carbon, so as to obtain the first negative electrode active material particles and the second negative electrode active material particles having irregular shapes.

As another example, the first negative electrode active material particles and the second negative electrode active material particles may be microspheric hard carbon particles. The first negative electrode active material particles and the second negative electrode active material particles may be prepared by the following steps: dehydrating and carbonizing starch and/or lignin at 200°C or less to obtain pre-carbonized particles with preliminarily fixed morphology (for example, pre-carbonized particles obtained from papermaking lignin, potato starch, corn starch, and rice starch have Dv50 of 50 µm, 25 µm, 10 µm, and 6 µm, respectively, and are spherical or approximately spherical), and optionally, further adding a salt or polymer dehydrating agent containing N, P, S and halogen, such as an ammonium salt, a phosphate, a sulfate, a sulfite, a persulfate, a halide, or a polymer of the above salts into the starch and/or lignin; heating the pre-carbonized particles at 400-800°C to obtain carbonized particles that are suitable for ball milling or jet mill crushing; the ball milling or jet mill crushing the carbonized particles to further obtain particles with other particle sizes that are in the shape of approximate spheres or cullet (for example, potato starch carbon particles with a particle size of 25 µm are subjected to first-stage ball milling to obtain 20 µm particles in the shape of approximate spheres and third-stage ball milling to obtain 5 µm particles in the shape of approximate cullet; rice starch with a particle size of 6 µm is subjected to first-stage ball milling to obtain 5 µm particles in the shape of approximate spheres and third-stage ball milling to obtain 1.5 µm particles in the shape of approximate cullet; and corn starch particles with a particle size of 10 µm are crushed with air flow to obtain 1 µm carbon particles in the shape of cullet); and the milled particles are placed in an inert atmosphere and held at a temperature of 1150°C for carbonization, and optionally, acetylene gas may be introduced for vapor deposition carbon coating of the milled particles; as a result, the first negative electrode active material particles and the second negative electrode active material particles having microsphere shapes are obtained.

In the present application, the tap density has a well-known meaning in the art and may be measured by a method known in the art. For example, the tap density may be tested with a powder tap density tester (such as Bettersize BT-310) in accordance with standards GB/T 5162-2006 and GB/T 24533-2009.

In the present application, the median particle size has a well-known meaning in the art and may represent a particle size corresponding to a cumulative particle size distribution percentage of 50% of particles. The median particle size may be measured by a method and an instrument known in the art. For example, the median particle size may be measured by a laser particle size analyzer (such as Mastersizer 2000E) in accordance with the GB/T 19077-2016 particle size distribution laser diffraction method.

In the present application, the compaction density of the negative electrode film layer has a well-known meaning in the art and may be measured by a method known in the art. For example, after the negative electrode plate is cold-pressed, several wafers completely coated with slurry and wafers uncoated with slurry having an area of Si are punched out with a punching machine and weighed separately to obtain average weights W₂ and W₁, thicknesses of the wafers are measured separately to obtain average thicknesses T₂ and T₁, and a compaction density of the negative electrode film layer is PD=(W₂-W₁)/(T₂-T₁)/S₁.

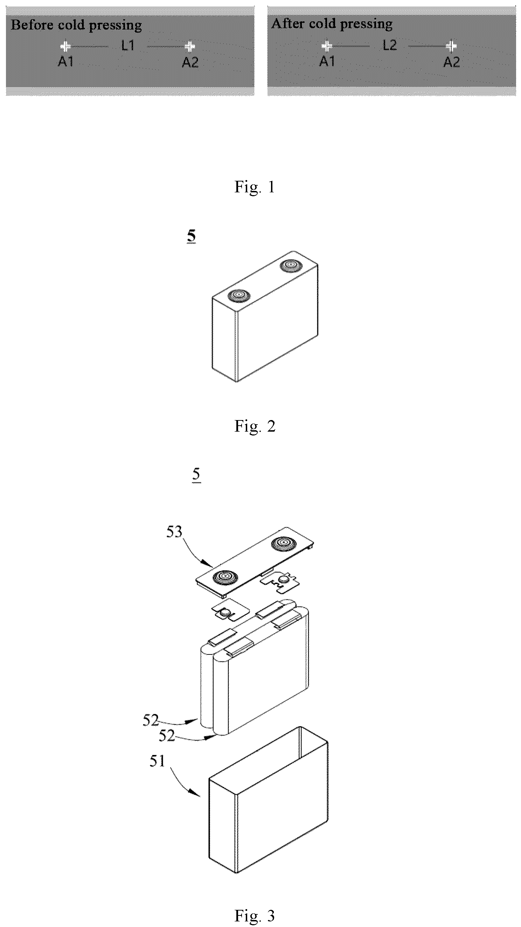

In the present application, the percentage of elongation E of the negative electrode plate has a well-known meaning in the art and may represent a length change rate of the negative electrode plate in a mechanical direction before and after cold pressing. The percentage of elongation E may be measured by a method and an instrument known in the art. For example, as shown in Fig. 1, a coated and dried negative electrode plate with a length of 2 m may be taken, and two mark points A₁ and A₂ are selected, where a line connecting A₁ and A₂ is parallel to a length direction of the negative electrode plate; the distance between the mark points A₁ and A₂ is accurately measured with a ruler, denoted as L₁; and after cold pressing on the negative electrode plate under certain pressure, the distance between A₁ and A₂ is measured, denoted as L₂, then E=(L₂-L₁)/L₁.

In the present application, the coating weight of the negative electrode film layer on single side has a well-known meaning in the art and may be measured by a method known in the art. For example, after the negative electrode plate is cold-pressed, several wafers completely coated with slurry and wafers uncoated with slurry having an area of S₂ are punched out with the punching machine and weighed separately to obtain average weights M₂ and Mi. The coating weight of the negative electrode plate on single side is CW=(M₂-M₁)/nS₂, wherein n represents the number of negative electrode film layers, n=1 when the negative electrode plate is coated on a single side, and n=2 when the negative electrode is coated on double sides.

In the present application, the thickness d₂ of the negative electrode film layer on single side may be measured with a sub-micron micrometer. For example, after the negative electrode plate is cold-pressed, the thickness d₃ of the negative electrode plate may be measured with the sub-micron micrometer. After the negative electrode film layer on the surface of the negative electrode plate is scraped off and washed with a solvent, the thickness d₄ of the negative electrode current collector is measured with the sub-micron micrometer, d₄=(d₃-d₄)/n, where n represents the number of negative electrode film layers, n=1 when the negative electrode plate is coated on a single side, and n=2 when the negative electrode is coated on double sides.

In the present application, the pore size and pore size distribution of the adsorption pores of the negative electrode material have well-known meanings in the art and may be measured by methods known in the art. For example, the pore size and pore size distribution may be measured by using a specific surface area analyzer (such as Tristar II 3020M).

In the present application, the specific surface area of the negative electrode active material particles has a well-known meaning in the art and may be measured by a method known in the art. For example, the specific surface area of the negative electrode active material may be measured by using a specific surface area analyzer (such as Tristar II 3020M) and a nitrogen adsorption/desorption method.

In the present application, the interplanar spacing has a well-known meaning in the art and may be measured by a method known in the art. For example, the interplanar spacing may be obtained by analyzing the negative electrode active material particles through an X-ray diffraction method (such as Equinox100).

In the present application, the true density of the negative electrode active material particles has a well-known meaning in the art and may be measured by a method known in the art. For example, the true density may be measured by a true density tester (such as AccuPyc II 1340).

In addition, the secondary battery, the battery module, the battery pack, and the electrical device of the present application will be described below with proper reference to the accompanying drawings.

### Secondary battery

A second aspect of the present application provides a secondary battery. In some embodiments, the secondary battery may be a sodium-ion battery.

Generally, a secondary battery includes a positive electrode plate, a negative electrode plate, an electrolyte and a separator. During charge and discharge processes of the battery, active ions are repeatedly intercalated and deintercalated between the positive electrode plate and the negative electrode plate. An electrolyte conducts ions between the positive electrode plate and the negative electrode plate. The separator is disposed between the positive electrode plate and the negative electrode plate, mainly preventing a short circuit between a positive electrode and a negative electrode while allowing ions to pass through.

### [Positive electrode plate]

The positive electrode plate includes a positive electrode current collector and a positive electrode film layer disposed on at least one surface of the positive electrode current collector. The positive electrode film layer includes the positive electrode active material in the first aspect of the present application.

As an example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, the metal foil may be an aluminum foil. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material base material (such as polypropylene (PP), polyethylene terephthalate (PET), polybutylene terephthalate (PBT), polystyrene (PS), or polyethylene (PE)).

In some embodiments, when the secondary battery is a sodium-ion battery, a positive electrode active material commonly known in the art for sodium-ion batteries may be used. As an example, one positive electrode active material may be used alone, or two or more positive electrode active materials may be used in combination. The positive electrode active material may be selected from sodium iron composite oxide (NaFeO₂), sodium cobalt composite oxide (NaCoO₂), sodium chromium composite oxide (NaCrO₂), sodium manganese composite oxide (NaMnO₂), sodium nickel composite oxide (NaNiO₂), sodium nickel titanium composite oxide (NaNi_{1/2}Ti_{1/2}O₂), sodium nickel manganese composite oxide (NaNi_{1/2}Mn_{1/2}O₂), sodium iron manganese composite oxide (Na_{2/3}Fe_{1/3}Mn_{2/3}O₂), sodium nickel cobalt manganese composite oxide (NaNi_{1/3}Co_{1/3}Mn_{1/3}O₂), sodium iron phosphate compound (NaFePO₄), sodium manganese phosphate compound (NaMnPO₄), sodium cobalt phosphate compound (NaCoPO₄), Prussian blue materials, polyanionic materials (phosphate, fluorophosphate, pyrophosphate, and sulfate), and the like. The present application is not limited to these materials, and other well-known materials conventionally used as positive electrode active materials for sodium-ion batteries may also be used in the present application.

In some embodiments, the positive electrode film layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer may further optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be manufactured by the following way: the foregoing components for manufacturing the positive electrode plate, such as the positive electrode active material, the conductive agent, the binder, and any other component(s), are dispersed in a solvent (such as N-methylpyrrolidone) to form a positive electrode slurry; and a positive electrode current collector is coated with the positive electrode slurry, and after processes including drying, cold pressing, and the like, the positive electrode plate may be obtained.

### [Negative electrode plate]

The secondary battery of the present application includes the negative electrode plate in the first aspect of the present application.

The negative electrode plate includes a negative electrode current collector and a negative electrode film layer disposed on at least one surface of the negative electrode current collector. The negative electrode film layer includes a negative electrode active material.

As an example, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, the metal foil may be a copper foil or an aluminum foil. The composite current collector may include a polymer material base layer and a metal layer formed on at least one surface of the polymer material base layer. The composite current collector may be formed by forming a metal material (copper, copper alloy, nickel, nickel alloy, titanium, titanium alloy, silver, silver alloy, or the like) on a polymer material base material (such as polypropylene (PP), polyethylene terephthalate (PET), polybutylene terephthalate (PBT), polystyrene (PS), or polyethylene (PE)).

In some embodiments, the negative electrode film layer may further optionally include a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer may further optionally include other auxiliaries, such as a thickener (carboxymethyl cellulose sodium (CMC-Na)).

In some embodiments, the negative electrode plate may be manufactured by the following way: the foregoing components for manufacturing the negative electrode plate, such as the first negative electrode active material particles, the second negative electrode active material particles, the optional slip increment component, a conductive agent and a binder, and any other component(s), are dispersed in a solvent (such as deionized water) to form a negative electrode slurry; and a negative electrode current collector is coated with the negative electrode slurry, and after processes including drying, cold pressing, and the like, the negative electrode plate may be obtained.

### [Electrolyte]

The electrolyte conducts ions between the positive electrode plate and the negative electrode plate. The type of the electrolyte is not specifically limited in the present application, and may be selected according to requirements. For example, the electrolyte may be liquid, colloidal, or all solid.

In some embodiments, the electrolyte is an electrolytic solution. The electrolytic solution includes an electrolyte salt and a solvent.

In some embodiments, the electrolyte salt may be selected from one or more of NaPF₆, NaClO₄, NaBCl₄, NaSO₃CF₃, and Na(CH₃)C₆H₄SO₃.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution may further optionally include additives. For example, the additives may include a negative electrode film-forming additive, a positive electrode film-forming additive, and additives that can improve some performances of the battery, such as an additive that improves overcharge performance of the battery and an additive that improves high-temperature or low-temperature performance of the battery.

### [Separator]

In some embodiments, the secondary battery further includes a separator. The type of the separator is not specially limited in the present application. The separator may be any known porous separator with good chemical and mechanical stability.

In some embodiments, the material of the separator may be selected from at least one of glass fibers, a non-woven fabric, polyethylene, polypropylene, and polyvinylidene fluoride. The separator may be a single-layer thin film or a multi-layer composite thin film, without special limitations. When the separator is a multi-layer composite thin film, materials of various layers may be the same or different, without special limitations.

In some embodiments, the positive electrode plate, the negative electrode plate, and the separator may be manufactured into an electrode assembly through a winding process or a stacking process.

In some embodiments, the secondary battery may include an outer package. The outer package may be used for packaging the foregoing electrode assembly and electrolyte.

In some embodiments, the outer package of the secondary battery may be a hard shell, such as a hard plastic shell, an aluminum shell, or a steel shell. The outer package of the secondary battery may alternatively be a soft bag, such as a pocket type soft bag. A material of the soft bag may be plastic, for example polypropylene, polybutylene terephthalate, poly(butylene succinate), and the like.

The present application does not have particular limitation to a shape of the secondary battery. The secondary battery may have cylindrical shape, square shape, or other arbitrary shapes. For example, Fig. 2 shows a secondary battery 5 with a square structure as an example.

In some embodiments, with reference to Fig. 3, the outer package may include a shell 51 and a cover plate 53. The shell 51 may include a bottom plate and side plates connected to the bottom plate, and the bottom plate and the side plates enclose to form an accommodating cavity. The shell 51 has an opening communicated with the accommodating cavity, and the cover plate 53 can cover the opening to close the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be determined by those skilled in the art according to actual requirements.

### Battery module and battery pack

In some embodiments, the secondary battery may be assembled into a battery module. The battery module may include one or more secondary batteries. The particular number of secondary batteries may be determined by those skilled in the art according to the application and capacity of the battery module.

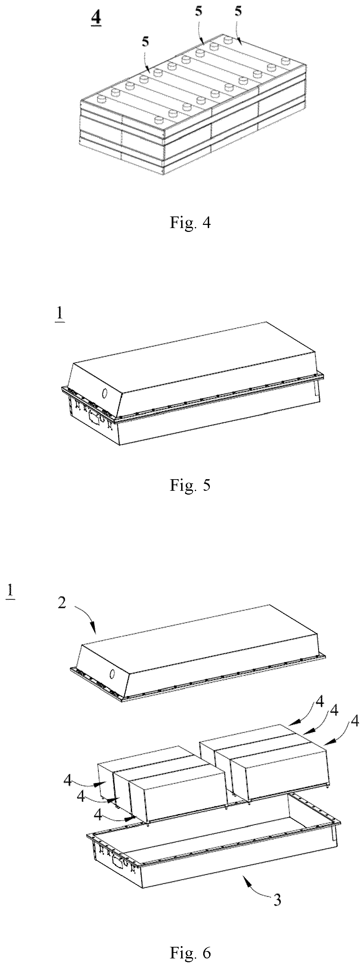

Fig. 4 shows a battery module 4 as an example. With reference to Fig. 4, in the battery module 4, a plurality of secondary batteries 5 may be arranged sequentially in a length direction of the battery module 4. Apparently, the secondary batteries may alternatively be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may be further assembled into a battery pack. The battery pack may include one or more battery modules. The particular number of battery modules may be determined by those skilled in the art according to the application and capacity of the battery pack.

Figs. 5 and 6 show a battery pack 1 as an example. With reference to Figs. 5 and 6, the battery pack 1 may include a battery box and a plurality of battery modules 4 disposed in the battery box. The battery box includes an upper box 2 and a lower box 3. The upper box 2 can cover the lower box 3 to form a closed space for accommodating the battery modules 4. The plurality of battery modules 4 may be arranged in the battery box in any manner.

### Electrical device

In addition, the present application further provides an electrical device. The electrical device includes at least one of the secondary battery, the battery module, or the battery pack provided by the present application. The secondary battery, the battery module, or the battery pack may be used as a power source of the electrical device, or as an energy storage unit of the electrical device. The electrical device may be, but not limited to, a mobile device (such as a mobile phone or a notebook computer), an electric vehicle (such as a full electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

For the electrical device, the secondary battery, the battery module, or the battery pack may be selected according to its usage requirements.

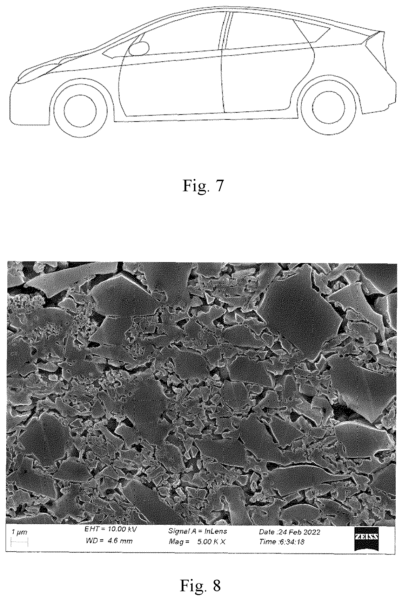

Fig. 7 shows an electrical device as an example. The electrical device is a full electric vehicle, a hybrid electric vehicle, a plug-in hybrid electric vehicle, or the like. In order to meet the requirements of the electrical device for high power and high energy density of the secondary battery, the battery pack or the battery module may be used.

As another example, the device may be a mobile phone, a tablet computer, or a notebook computer. The device is generally required to be thin and light, so the secondary battery may be used as a power source.

### Examples

Examples of the present application are described below. The examples described below are exemplary, are merely used for explaining the present application, and cannot be understood as limitations to the present application. Specific technologies or conditions that are not described in the examples are in accordance with the technologies or conditions described in the documents of this field or product specifications. Reagents or instruments not marked with manufacturers are all commercially available conventional products.

### Example 1

### 1) Manufacturing of a positive electrode plate

Sodium nickel manganese composite oxide (NaNi_{1/2}Mn_{1/2}O₂) as a positive electrode active material, acetylene black as a conductive agent, and polyvinylidene fluoride (PVDF) as a binder were fully mixed at a weight ratio of 92:5:3 in a proper amount of N-methylpyrrolidone (NMP) to form a uniform positive electrode slurry; and the positive electrode slurry was applied on a 13 µm thick aluminum foil as a positive electrode current collector; and after drying at 100°C and pressing, a positive electrode plate was obtained.

### 2) Manufacturing of a negative electrode plate

Negative electrode active material particles, acetylene black as a conductive agent, styrene-acrylic emulsion as a binder, and carboxymethylcellulose sodium (CMC-Na) as a thickener were fully mixed at weight ratio of 94:1:4:1 in a proper amount of deionized water to form a uniform negative electrode slurry; and the negative electrode slurry was applied on two sides of a 8 µm thick copper foil as a negative electrode current collector; and after drying at 100°C and pressing, a negative electrode plate was obtained.

The negative electrode active material particles included first negative electrode active material particles and second negative electrode active material particles, the first negative electrode active material particles and the second negative electrode active material particles were hard carbon particles having irregular shapes, a median particle size D¹50 of the first negative electrode active material particles was 25 µm, and a median particle size D²50 of the second negative electrode active material particles was 22 µm. Based on a total mass of the negative electrode active material particles, a mass percentage Q₁ of the first negative electrode active material particles was 70%. A coating weight CW of the negative electrode plate on single side was 8 mg/cm².

### 3) Separator

A polyethylene PE separator (celgard) was used.

### 4) Preparation of an electrolytic solution

Equal volumes of ethylene carbonate (EC) and propylene carbonate (PC) were mixed uniformly to obtain an organic solvent, and then NaPF₆ was uniformly dissolved in the above organic solvent to obtain an electrolytic solution, wherein NaPF₆ had a concentration of 1 mol/L.

### 5) Manufacturing of a battery

The positive electrode plate, the separator, and the negative electrode plate were sequentially stacked. After adding the electrolytic solution and sealing, a sodium-ion battery was obtained.

### Examples 2 to 14

Based on the manufacturing method in Example 1, D¹50 and D²50 were adjusted to manufacture sodium-ion batteries in Examples 2 to 14.

### Examples 15 to 22

Based on the manufacturing method in Example 1, D¹50, D²50 and Q₁ were adjusted to manufacture sodium-ion batteries in Examples 15 to 22.

### Examples 23 to 26

Based on the manufacturing method in Example 1, D¹50, D²50 and Q₁ were adjusted and a slip increment component was added to the negative electrode slurry to manufacture sodium-ion batteries in Examples 23 to 26.

### Examples 27 to 29

Based on the manufacturing method in Example 1, CW of the negative electrode plate was adjusted to manufacture sodium-ion batteries in Examples 27 to 29.

### Example 30

Based on the manufacturing method in Example 1, D¹50 and D²50 were adjusted and the second negative electrode active material particles were replaced with microspheric hard carbon particles to manufacture a sodium-ion battery in Example 30.

### Example 31

Based on the manufacturing method in Example 1, D¹50 and D²50 were adjusted and both the first negative electrode active material particles and the second negative electrode active material particles were replaced with microspheric hard carbon particles to manufacture a sodium-ion battery in Example 31.

### Example 32

Based on the manufacturing method in Example 1, D¹50 and D²50 were adjusted and the first negative electrode active material particles were replaced with microspheric hard carbon particles to manufacture a sodium-ion battery in Example 32.

### Example 33

Based on the manufacturing method in Example 1, D¹50 and D²50 were adjusted and the second negative electrode active material particles were replaced with soft carbon particles having irregular shape to manufacture a sodium-ion battery in Example 33.

### Example 34

Based on the manufacturing method in Example 1, D¹50 and D²50 were adjusted and the second negative electrode active material particles were replaced with MCMB particles having approximately spherical shape to manufacture a sodium-ion battery in Example 34.

### Example 35

Based on the manufacturing method in Example 1, D¹50 and D²50 were adjusted and the first negative electrode active material particles were replaced with soft carbon particles having irregular shape to manufacture a sodium-ion battery in Example 35.

### Example 36

Based on the manufacturing method in Example 1, D¹50 and D²50 were adjusted and the first negative electrode active material particles were replaced with MCMB particles having approximately spherical shape to manufacture a sodium-ion battery in Example 36.

### Examples 37 to 41

Based on the manufacturing method in Example 1, D¹50, D²50 and the types of binder used for the negative electrode plates were adjusted to manufacture sodium-ion batteries in Examples 37 to 41. The binder used for the negative electrode plate in Example 37 was styrene butadiene rubber (SBR), the binder used for the negative electrode plate in Example 38 was hydrogenated nitrile rubber, the binder used for the negative electrode plate in Example 39 was a copolymer of vinylidene fluoride and hexafluoropropylene, the binder used for the negative electrode plate in Example 40 was a copolymer of vinylidene fluoride and acrylate, and the binder used for the negative electrode plate in Example 41 was polytetrafluoroethylene.

### Examples 42 to 45

Based on the manufacturing method in Example 1, D¹50, D²50 and the tap density of the first negative electrode active material particles were adjusted to manufacture sodium-ion batteries in Examples 42 to 45.

### Comparative Example 1

Based on the manufacturing method in Example 1, the negative electrode active material particles were replaced with hard carbon particles having an irregular shape and a median particle size of 5 µm to manufacture a sodium-ion battery in Comparative Example 1.

### Comparative Example 2

Based on the manufacturing method in Example 1, the negative electrode active material particles were replaced with microspheric hard carbon particles having a median particle size of 5 µm to manufacture a sodium-ion battery in Comparative Example 2.

### Comparative Example 3

Based on the manufacturing method in Example 1, D¹50 and D²50 were adjusted to manufacture a sodium-ion battery in Comparative Example 3.

Relevant manufacturing parameters of the negative electrode plates in Examples 1-45 and Comparative Examples 1-3 were shown in Table 1 below. Q₁ represented a mass percentage of the first negative electrode active material particles based on a total mass of the negative electrode active material particles; Q₂ represented a mass percentage of the second negative electrode active material particles based on the total mass of the negative electrode active material particles; and Q₃ represented a mass ratio of the slip increment component to the negative electrode active material particles. The tap density ρ of the first negative electrode active material particles, D¹50, and D²50 may be tested according to the foregoing methods described in this specification, and d and PAmay be calculated according to the foregoing methods described in this specification.

Relevant test parameters of the negative electrode plates in Examples 1-45 and Comparative Examples 1-3 were shown in Table 2 below. CW, d₂, E, and PD may be tested according to the foregoing methods described in this specification, and P may be calculated according to the foregoing methods described in this specification.

The negative electrode plate in Example 1 was tested by SEM, and an obtained SEM image was shown in Fig. 8.

**Table 1: Manufacturing parameters of the negative electrode plates in Examples 1-45 and Comparative Examples 1-3**

| Number | ρ/ (g/cm³) | Q₁/ % | D¹50/ µm | Q₂/ % | D²50/ µm | d/ µm | Slip increment component | Q₃/ % | PA/ (g/cm³) |
|---|---|---|---|---|---|---|---|---|---|
| Example 1 | 0.86 | 70 | 25 | 30 | 22 | 3 | / | 0 | 2.03 |
| Example 2 | 0.86 | 70 | 25 | 30 | 20 | 5 | / | 0 | 2.03 |
| Example 3 | 0.86 | 70 | 25 | 30 | 18 | 7 | / | 0 | 2.03 |
| Example 4 | 0.86 | 70 | 25 | 30 | 15 | 10 | / | 0 | 2.03 |
| Example 5 | 0.86 | 70 | 25 | 30 | 10 | 15 | / | 0 | 2.03 |
| Example 6 | 0.86 | 70 | 25 | 30 | 6 | 19 | / | 0 | 2.03 |
| Example 7 | 0.86 | 70 | 13 | 30 | 10 | 3 | / | 0 | 2.03 |
| Example 8 | 0.86 | 70 | 15 | 30 | 10 | 5 | / | 0 | 2.03 |
| Example 9 | 0.86 | 70 | 17 | 30 | 10 | 7 | / | 0 | 2.03 |
| Example 10 | 0.86 | 70 | 20 | 30 | 10 | 10 | / | 0 | 2.03 |
| Example 11 | 0.86 | 70 | 29 | 30 | 10 | 19 | / | 0 | 2.03 |
| Example 12 | 0.86 | 70 | 50 | 30 | 40 | 10 | / | 0 | 2.03 |
| Example 13 | 0.86 | 70 | 11 | 30 | 1 | 10 | / | 0 | 2.03 |
| Example 14 | 0.86 | 70 | 4 | 30 | 1 | 3 | / | 0 | 2.03 |
| Example 15 | 0.86 | 5 | 5 | 95 | 2 | 3 | / | 0 | 2.03 |
| Example 16 | 0.86 | 20 | 5 | 80 | 2 | 3 | / | 0 | 2.03 |
| Example 17 | 0.86 | 40 | 5 | 60 | 2 | 3 | / | 0 | 2.03 |
| Example 18 | 0.86 | 50 | 5 | 50 | 2 | 3 | / | 0 | 2.03 |
| Example 19 | 0.86 | 70 | 5 | 30 | 2 | 3 | / | 0 | 2.03 |
| Example 20 | 0.86 | 80 | 5 | 20 | 2 | 3 | / | 0 | 2.03 |
| Example 21 | 0.86 | 95 | 5 | 5 | 2 | 3 | / | 0 | 2.03 |
| Example 22 | 0.86 | 98 | 5 | 2 | 2 | 3 | / | 0 | 2.03 |
| Example 23 | 0.86 | 70 | 5 | 30 | 2 | 3 | Artificial graphite | 1 | 2.03 |
| Example 24 | 0.86 | 70 | 5 | 30 | 2 | 3 | Natural graphite | 1 | 2.03 |
| Example 25 | 0.86 | 70 | 5 | 30 | 2 | 3 | Graphene | 1 | 2.03 |
| Example 26 | 0.86 | 70 | 5 | 30 | 2 | 3 | Artificial graphite | 2 | 2.03 |
| Example 27 | 0.86 | 70 | 5 | 30 | 2 | 3 | / | 0 | 2.03 |
| Example 28 | 0.86 | 70 | 5 | 30 | 2 | 3 | / | 0 | 2.03 |
| Example 29 | 0.86 | 70 | 5 | 30 | 2 | 3 | / | 0 | 2.03 |
| Example 30 | 0.86 | 70 | 5 | 30 | 2 | 3 | / | 0 | 2.03 |
| Example 31 | 0.86 | 70 | 5 | 30 | 2 | 3 | / | 0 | 2.03 |
| Example 32 | 0.86 | 70 | 5 | 30 | 2 | 3 | / | 0 | 2.03 |
| Example 33 | 0.86 | 70 | 25 | 30 | 15 | 10 | / | 0 | 2.03 |
| Example 34 | 0.86 | 70 | 25 | 30 | 15 | 10 | / | 0 | 2.03 |
| Example 35 | 0.86 | 70 | 25 | 30 | 15 | 10 | / | 0 | 2.03 |
| Example 36 | 0.86 | 70 | 25 | 30 | 15 | 10 | / | 0 | 2.03 |
| Example 37 | 0.86 | 70 | 5 | 30 | 2 | 3 | / | 0 | 2.03 |
| Example 38 | 0.86 | 70 | 5 | 30 | 2 | 3 | / | 0 | 2.03 |
| Example 39 | 0.86 | 70 | 5 | 30 | 2 | 3 | / | 0 | 2.03 |
| Example 40 | 0.86 | 70 | 5 | 30 | 2 | 3 | / | 0 | 2.03 |
| Example 41 | 0.86 | 70 | 5 | 30 | 2 | 3 | / | 0 | 2.03 |
| Example 42 | 0.4 | 70 | 5 | 30 | 2 | 3 | / | 0 | 2.03 |
| Example 43 | 0.93 | 70 | 5 | 30 | 2 | 3 | / | 0 | 2.03 |
| Example 44 | 1 | 70 | 5 | 30 | 2 | 3 | / | 0 | 2.03 |
| Example 45 | 1.4 | 70 | 5 | 30 | 2 | 3 | / | 0 | 2.03 |
| Comparative Example 1 | 0.86 | 100 | 5 | / | / | / | / | 0 | 2.03 |
| Comparative Example 2 | 0.86 | 100 | 5 | / | / | / | / | 0 | 2.03 |
| Comparative Example 3 | 0.86 | 70 | 12 | 30 | 10 | 2 | / | 0 | 2.03 |

**Table 2: Test parameters of the negative electrode plates in Examples 1-45 and Comparative Examples 1-3**

| Number | CW(mg/cm²) | d₂/µm | E/% | PD/(g/cm³) | P/% |
|---|---|---|---|---|---|
| Example 1 | 8 | 75.5 | 0.15 | 1.06 | 47.8 |
| Example 2 | 8 | 74.8 | 0.15 | 1.07 | 47.3 |
| Example 3 | 8 | 74.1 | 0.15 | 1.08 | 46.8 |
| Example 4 | 8 | 73.4 | 0.15 | 1.09 | 46.3 |
| Example 5 | 8 | 72.7 | 0.15 | 1.10 | 45.8 |
| Example 6 | 8 | 72.1 | 0.15 | 1.11 | 45.3 |
| Example 7 | 8 | 75.5 | 0.15 | 1.06 | 47.8 |
| Example 8 | 8 | 74.8 | 0.15 | 1.07 | 47.3 |
| Example 9 | 8 | 74.1 | 0.15 | 1.08 | 46.8 |
| Example 10 | 8 | 73.4 | 0.15 | 1.09 | 46.3 |
| Example 11 | 8 | 72.7 | 0.15 | 1.11 | 45.3 |
| Example 12 | 8 | 74.8 | 0.15 | 1.09 | 46.3 |
| Example 13 | 8 | 74.8 | 0.15 | 1.09 | 46.3 |
| Example 14 | 8 | 75.5 | 0.15 | 1.06 | 47.8 |
| Example 15 | 8 | 76.2 | 0.15 | 1.05 | 48.3 |
| Example 16 | 8 | 72.7 | 0.15 | 1.01 | 50.3 |
| Example 17 | 8 | 72.1 | 0.15 | 1.06 | 47.8 |
| Example 18 | 8 | 76.2 | 0.15 | 1.09 | 46.3 |
| Example 19 | 8 | 72.1 | 0.15 | 1.11 | 45.3 |
| Example 20 | 8 | 72.7 | 0.15 | 1.11 | 45.3 |
| Example 21 | 8 | 76.2 | 0.15 | 1.1 | 45.3 |
| Example 22 | 8 | 52.1 | 0.85 | 0.96 | 52.7 |
| Example 23 | 8 | 69.6 | 0.15 | 1.15 | 43.4 |
| Example 24 | 8 | 69.6 | 0.15 | 1.15 | 43.4 |
| Example 25 | 8 | 69.6 | 0.15 | 1.15 | 43.4 |
| Example 26 | 8 | 69 | 0.15 | 1.16 | 42.9 |
| Example 27 | 2 | 18 | 0.14 | 1.11 | 45.3 |
| Example 28 | 6 | 54.1 | 0.15 | 1.11 | 45.3 |
| Example 29 | 13 | 117.1 | 0.15 | 1.1 | 45.8 |
| Example 30 | 8 | 71.4 | 0.15 | 1.12 | 44.8 |
| Example 31 | 8 | 66.7 | 0.15 | 1.2 | 40.9 |
| Example 32 | 8 | 69 | 0.15 | 1.16 | 42.9 |
| Example 33 | 8 | 72.7 | 0.15 | 1.1 | 45.8 |
| Example 34 | 8 | 72.7 | 0.15 | 1.1 | 45.8 |
| Example 35 | 8 | 72.7 | 0.15 | 1.1 | 45.8 |
| Example 36 | 8 | 72.7 | 0.15 | 1.1 | 45.8 |
| Example 37 | 8 | 72.7 | 0.15 | 0.96 | 52.7 |
| Example 38 | 8 | 72.7 | 0.15 | 1.09 | 46.3 |
| Example 39 | 8 | 72.7 | 0.15 | 1.09 | 46.3 |
| Example 40 | 8 | 72.7 | 0.15 | 1.09 | 46.3 |
| Example 41 | 8 | 72.7 | 0.15 | 1.09 | 46.3 |
| Example 42 | 8 | 83.3 | 0.15 | 0.96 | 52.7 |
| Example 43 | 8 | 72.1 | 0.15 | 1.11 | 44.8 |
| Example 44 | 8 | 72.1 | 0.15 | 1.11 | 45.3 |
| Example 45 | 8 | 72.1 | 0.15 | 1.12 | 45.3 |
| Comparative Example 1 | 4 | 84.2 | 0.9 | 0.85 | 57.5 |
| Comparative Example 2 | 6 | 80 | 0.15 | 0.99 | 51.2 |
| Comparative Example 3 | 5 | 82.5 | 0.7 | 0.87 | 57.1 |

In addition, performances of the sodium-ion batteries obtained in Examples 1-45 and Comparative Examples 1-3 above were tested. The test results were shown in Table 3 below.

### (1) Energy density test

At 25°C, a secondary battery was charged at a constant current rate of 0.33 C to a voltage of 4.2 V, then charged with the constant voltage of 4.2 V to a current of 0.05 C to reach a full charge state, stood for 5 min, discharged at the constant current rate of 0.33 C to a voltage of 2.5 V, and stood again for 5 min, a capacity and voltage platform of the secondary battery at the constant current discharge rate of 0.33 C were recorded, and a mass of the secondary battery was finally measured.

Energy density of the secondary battery (Wh/kg) = (capacity of the secondary battery at the constant current discharge rate of 0.33 C × voltage platform of the secondary battery at the constant current discharge rate of 0.33 C)/ mass of the secondary battery.

### (2) Cycle life test

At 25°C, the secondary battery was charged at a constant current rate of 1/3 C to 4.2 V, then charged with the constant voltage of 4.2 V to a current of 0.05 C, stood for 5 min, and discharged at 1/3 C to 2.8 V, and the obtained capacity was recorded as initial capacity C₀. The above steps were repeated for the same battery, and the discharge capacity Cₙ of the battery after the n^{th} cycle was recorded. A battery capacity retention rate after each cycle was Pₙ=Cₙ/C₀*100%, and the minimum n value corresponding to Pₙ ≤ 80% was used as the cycle life of the secondary battery.

**Table 3: Performance test results in Examples 1-45 and Comparative Examples 1-3**

| Number | Energy density, Wh/kg | Cycle life/cycles |
|---|---|---|
| Example 1 | 120 | 1990 |
| Example 2 | 120 | 1991 |
| Example 3 | 120 | 1993 |
| Example 4 | 120 | 1995 |
| Example 5 | 120 | 1990 |
| Example 6 | 120 | 1998 |
| Example 7 | 120 | 1995 |
| Example 8 | 120 | 1993 |
| Example 9 | 120 | 1991 |
| Example 10 | 120 | 1995 |
| Example 11 | 120 | 1996 |
| Example 12 | 120 | 1991 |
| Example 13 | 120 | 1991 |
| Example 14 | 120 | 1950 |
| Example 15 | 120 | 1992 |
| Example 16 | 120 | 1995 |
| Example 17 | 120 | 1994 |
| Example 18 | 120 | 1990 |
| Example 19 | 120 | 1998 |
| Example 20 | 120 | 1991 |
| Example 21 | 120 | 1997 |
| Example 22 | 114 | 1902 |
| Example 23 | 120 | 1998 |
| Example 24 | 120 | 1993 |
| Example 25 | 120 | 1995 |
| Example 26 | 120 | 1992 |
| Example 27 | 96 | 1991 |
| Example 28 | 110 | 1995 |
| Example 29 | 150 | 1994 |
| Example 30 | 120 | 1990 |
| Example 31 | 120 | 1993 |
| Example 32 | 120 | 1991 |
| Example 33 | 118 | 1800 |
| Example 34 | 117 | 1824 |
| Example 35 | 96 | 1830 |
| Example 36 | 93 | 1843 |
| Example 37 | 75 | 1011 |
| Example 38 | 120 | 1831 |
| Example 39 | 120 | 1826 |
| Example 40 | 120 | 1811 |
| Example 41 | 120 | 1831 |
| Example 42 | 115 | 1841 |
| Example 43 | 120 | 1990 |
| Example 44 | 120 | 1993 |
| Example 45 | 120 | 1990 |
| Comparative Example 1 | 70 | 850 |
| Comparative Example 2 | 114 | 1500 |
| Comparative Example 3 | 80 | 937 |

According to Examples 1 to 6, when the median particle size of the first negative electrode active material particles remained unchanged, as the median particle size of the second negative electrode active material particles decreased, the difference in median particle size between the first negative electrode active material particles and the second negative electrode active material particles increased, and correspondingly, the bulk density of the negative electrode active material particles also increased. As shown in Fig. 8, the second negative electrode active material particles with a smaller median particle size can fill the gaps between the first negative electrode active material particles, which enabled the negative electrode film layer to have a high compaction density. It can be seen from Examples 7 to 11 that when the median particle size of the second negative electrode active material particles remained unchanged, as the median particle size of the first negative electrode active material particles increased, the difference in median particle size between the first negative electrode active material particles and the second negative electrode active material particles increased, and correspondingly, the bulk density of the negative electrode active material particles also increased. As a result, the negative electrode film layer can also have a high compaction density. It can be seen from Examples 4, 10, 12, and 13 as well as Examples 1, 7, 14, and 19 that when the difference between the median particle size of the first negative electrode active material particles and the median particle size of the second negative electrode active material particles was constant, the median particle sizes of the first negative electrode active material particles and the second negative electrode active material particles had a certain effect on the compaction density of the negative electrode film layer. It can be seen from Examples 1 to 14 and 19 that the difference in median particle size between the first negative electrode active material particles and the second negative electrode active material particles within the ranges of the present application can effectively increase the compaction density of the negative electrode film layer and maintain the parameter P of the negative electrode film layer in a proper range. As a result, the energy density and cycle life of the sodium-ion battery can be improved.

It can be seen from Examples 15 to 22 that as the mass percentage Q₁ of the first negative electrode active material particles decreased, the compaction density of the negative electrode film layer roughly showed a trend of first increase and then decrease. This may be because when Q₁ was relatively high, the mass percentage Q₂ of the second negative electrode active material was relatively low, the improvement on the bulk density after mixing was limited, the increase in the compaction density after cold pressing was limited, and thus the compaction density of the negative electrode film layer was relatively low. When Q₁ was relatively low, Q₂ was relatively high, and after the second negative electrode active material particles filled the gaps of the first negative electrode active material particles, there were excessive second negative electrode active material particles. The compaction density could hardly increase after the excessive second negative electrode active material particles were cold-pressed. In addition, the median particle size of the second negative electrode active material particles was relatively small, which also led to the relatively low compaction density of the negative electrode film layer. When the values of Q₁ and Q₂ were within proper ranges, not only the compaction density of the negative electrode film layer can be effectively increased, but also the corresponding parameter P of the negative electrode film layer can be maintained within a proper range, so that the sodium-ion battery had high energy density and long cycle life.

It can be seen from Examples 19 and 23 to 26 that, the slip increment component was added to the negative electrode slurry to further increase the compaction density of the negative electrode film layer. This may be because the slip increment component can slip during the cold pressing process of the negative electrode plate, so the second negative electrode active material particles more fully filled the gaps between the first negative electrode active material particles. It can be seen from Examples 23 and 26 that, as the addition amount of the slip increment component increased, the compaction density of the negative electrode film layer correspondingly increased, but the energy density of the sodium-ion battery did not change significantly. This may be because it is difficult for sodium ions to intercalate into the slip increment component. The slip increment component increased the compaction density of the negative electrode film layer and also decreased theoretical gram capacity of the negative electrode film layer.

It can be seen from Examples 19 and 27 to 29 that, the coating weight of the negative electrode film layer on single side had little impact on the compaction density of the negative electrode film layer. When the difference in median particle size between the first negative electrode active material particles and the second negative electrode active material particles was within the ranges of the present application, the negative electrode film layers with different coating weights on single side can all have high compaction density and suitable parameter P, and their secondary batteries had long cycle lives.

It can be seen from Examples 19 and 30 to 32 that, when at least one of the first negative electrode active material particles and the second active material particles were microspheric hard carbon particles, the compaction density of the negative electrode film layer can be further increased.

It can be seen from Examples 33 to 36 that, for sodium-ion batteries, the hard carbon had higher theoretical gram capacity and cycle stability than soft carbon and MCMB.

It can be seen from Examples 19 and 37 to 41 that, compared to the conventional negative electrode binder SBR, the flexible binder can increase the compaction density of the negative electrode film layer, improve the long-term cycle performance of the sodium-ion battery, and enhance the energy density and cycle life of the sodium-ion battery.

It can be seen from Examples 19 and 42 to 45 that, as the tap density of the first negative electrode active material particles increased, the compaction density of the negative electrode film layer also increased.

Compared to this, Comparative Examples 1 and 2 used only hard carbon particles having a median particle size of 5 µm as the negative electrode active material particles, so the compaction density of the negative electrode film layer was relatively low. As a result, the negative electrode had a relatively low energy density and relatively long transport paths for electrons and sodium ions. Therefore, the energy density and cycle life of the sodium-ion battery were relatively low. Although negative electrode active material particles with different median particle sizes were compounded in Comparative Example 3, the difference in median particle size between the first negative electrode active material particles and the second negative electrode active material particles in Comparative Example 3 was lower than the range defined by the present application, and had a limited effect on the increase in the compaction density of the negative electrode film layer. As a result, the energy density and cycle life of the sodium-ion battery in Comparative Example 3 were unsatisfactory.

It should be noted that the present application is not limited to the foregoing embodiments. The foregoing embodiments are only examples, and all embodiments within the scope of the technical solution of the present application that have substantially the same composition and effects as the technical concept fall within the technical scope of the present application. Moreover, various variations that can be conceived by those skilled in the art and other embodiments constituted by combining some elements of the embodiments without departing from the scope of the main purpose of the present application are further included in the scope of the present application.

## Claims

1. A negative electrode plate, comprising:
a negative electrode current collector; and
a negative electrode film layer which is located on at least one surface of the negative electrode current collector and comprises first negative electrode active material particles and second negative electrode active material particles, the first negative electrode active material particles comprising a plurality of adsorption holes and having a tap density of 0.4 g/cm³-1.4 g/cm³, and optionally 0.6 g/cm³-1.0 g/cm³,
wherein a difference d in median particle size between the first negative electrode active material particles and the second negative electrode active material particles satisfies: 3 µm ≤ d < 19 µm, and
a compaction density PD of the negative electrode film layer satisfies: 0.8 g/cm³ ≤ PD ≤ 1.4 g/cm³, and optionally 1.0 g/cm³ ≤ PD ≤ 1.2 g/cm³.

2. The negative electrode plate according to claim 1, wherein the first negative electrode active material particles have a median particle size D¹50 of 4 µm-50 µm, and optionally 4 µm-25 µm; and
the second negative electrode active material particles have a the median particle size D²50 of 1 µm-40 µm, and optionally 1 µm-20 µm.

3. The negative electrode plate according to claim 1 or 2, wherein based on a total mass of the first negative electrode active material particles and the second negative electrode active material particles, a mass percentage of the first negative electrode active material particles is 5%-95%, and optionally 70%-95%.

4. The negative electrode plate according to any one of claims 1 to 3, wherein a percentage of elongation E of the negative electrode plate satisfies: 0.1% ≤ E ≤ 0.2%, and optionally 0.1% ≤ E ≤ 0.15%.

5. The negative electrode plate according to any one of claims 1 to 4, wherein a coating weight CW of the negative electrode film layer on single side is 2 mg/cm²-13 mg/cm², and optionally 5 mg/cm²-12 mg/cm².

6. The negative electrode plate according to any one of claims 1 to 5, wherein the negative electrode film layer satisfies: 30% ≤ P ≤ 60%, and optionally 45% ≤ P ≤ 55%,
wherein P=[1-CW/(d₁*PA)]*100%, d₁=d₂/(1+E), CW represents a coating weight of the negative electrode film layer on single side, PA represents a true density of the negative electrode film layer on single side, E represents a percentage of elongation of the negative electrode plate; and d₂ represents a thickness of the negative electrode film layer on single side.

7. The negative electrode plate according to any one of claims 1 to 6, wherein the first negative electrode active material particles satisfy at least one of the following:
(1) a pore size of the adsorption pores is 0.1 nm-16 nm, and optionally 1 nm-7 nm;
(2) a specific surface area of the first negative electrode active material particles is 1 m³/g-40 m³/g, and optionally 1.5 m³/g-10 m³/g;
(3) a (002) interplanar spacing of the first negative electrode active material particles is 0.34 nm-0.45 nm, and optionally 0.35 nm-0.4 nm; and
(4) a true density of the first negative electrode active material particles is 1.3 g/cm³-2.0 g/cm³, and optionally 1.4 g/cm³-1.8 g/cm³.

8. The negative electrode plate according to any one of claims 1 to 7, wherein the first negative electrode active material particles are selected from one or more of hard carbon, soft carbon, and mesophase carbon microbeads; and the second negative electrode active material particles are selected from one or more of hard carbon, soft carbon, and mesophase carbon microbeads.

9. The negative electrode plate according to any one of claims 1 to 8, wherein the first negative electrode active material particles have an irregular shape and/or microspheric shape, and the second negative electrode active material particles have an irregular shape and/or microspheric shape, and
optionally, based on a total mass of the first negative electrode active material particles and the second negative electrode active material particles, a mass percentage of the first negative electrode active material particles having an irregular shape is 5%-95%, and optionally 70%-95%.

10. The negative electrode plate according to any one of claims 1 to 8, wherein the first negative electrode active material particles are selected from hard carbon particles having an irregular shape, the second negative electrode active material particles are selected from microspheric hard carbon particles, and based on a total mass of the first negative electrode active material particles and the second negative electrode active material particles, a mass percentage of the first negative electrode active material particles is 70%-95%.

11. The negative electrode plate according to any one of claims 1 to 8, wherein the first negative electrode active material particles are selected from microspheric hard carbon particles, and a median particle size D¹50 of the first negative electrode active material particles is 10 µm-50 µm; and
the second negative electrode active material particles are selected from microspheric hard carbon particles, and a median particle size D²50 of the second negative electrode active material particles is 5 µm-40 µm,
wherein based on a total mass of the first negative electrode active material particles and the second negative electrode active material particles, the mass percentage of the first negative electrode active material particles is 5%-95%, and optionally 70%-95%.

12. The negative electrode plate according to claim 10 or 11, wherein the compaction density PD of the negative electrode film layer satisfies: 1.0 g/cm³ ≤ PD ≤ 1.2 g/cm³; and
the negative electrode film layer satisfies: 30% ≤ **P** ≤ 60%, and optionally 45% ≤ P ≤ 55%,
wherein P=[1-CW/(d₁*PA)]*100%, d₁=d₂/(1+E), CW represents a coating weight of the negative electrode film layer on single side, PA represents a true density of the negative electrode film layer on single side, E represents a percentage of elongation of the negative electrode plate; and d₂ represents a thickness of the negative electrode film layer on single side.

13. The negative electrode plate according to claim 10 or 11, wherein the negative electrode film layer further comprises a slip increment component, a ratio of a sum of a mass of the first negative electrode active material particles and a mass of the second negative electrode active material particles to a mass of the slip increment component is 100:2-100: 1, and the slip increment component comprises one or more of artificial graphite, natural graphite, and graphene.

14. The negative electrode plate according to any one of claims 1 to 13, wherein the negative electrode film layer further comprises a flexible binder, the flexible binder comprises one or more of a styrene-acrylic emulsion, a copolymer of vinylidene fluoride and tetrafluoroethylene, a copolymer of vinylidene fluoride and hexafluoropropylene, a copolymer of vinylidene fluoride and acrylate, polytetrafluoroethylene, nitrile rubber, and hydrogenated nitrile rubber.

15. A secondary battery, comprising the negative electrode plate according to any one of claims 1 to 14.

16. A battery module, comprising the secondary battery according to claim 15.

17. A battery pack, comprising the battery module according to claim 16.

18. An electrical device, comprising at least one of the secondary battery according to claim 15, the battery module according to claim 16, or the battery pack according to claim 17.
